Europäisches Patentamt

European Patent Office

Office européen des brevets

(19)

(11) Numéro de publication: **0 193 447
B1**

# (12) FASCICULE DE BREVET EUROPEEN

(45) Date de publication du fascicule du brevet:
25.04.90

(21) Numéro de dépôt: **86400281.1**

(22) Date de dépôt: **10.02.86**

(51) Int. Cl.⁴: **H02H 3/093**, H02H 1/00

(54) **Disjoncteur à déclencheur statique numérique doté d'un circuit de calibrage.**

(30) Priorité: **25.02.85 FR 8503158**

(43) Date de publication de la demande:
**03.09.86 Bulletin 86/36**

(45) Mention de la délivrance du brevet:
**25.04.90 Bulletin 90/17**

(84) Etats contractants désignés:
**AT BE CH DE GB IT LI NL SE**

(56) Documents cités:
**GB-A- 2 066 597
GB-A- 2 073 969
US-A- 4 470 092**

(73) Titulaire: **MERLIN GERIN, Rue Henri Tarze,
F-38050 Grenoble Cédex(FR)**

(72) Inventeur: **Demeyer, Pierre, Merlin Gerin,
F-38050 Grenoble Cedex(FR)**

(74) Mandataire: **Kern, Paul et al, Merlin Gerin Sce.
Brevets 20, rue Henri Tarze, F-38050 Grenoble
Cédex(FR)**

ACTORUM AG

## Description

L'invention est relative à un déclencheur statique numérique pour un disjoncteur électrique comprenant :
- des capteurs de courant qui engendrent des signaux analogiques proportionnels aux courants parcourant les conducteurs protégés par le disjoncteur,
- des circuits redresseurs pour redresser lesdits signaux et délivrer un signal continu analogique représentatif de la valeur maximale desdits courants,
- un convertisseur analogique digital ayant une entrée recevant ledit signal analogique et une sortie délivrant un signal numérisé échantillonné correspondant,
- un ensemble de traitement numérique à microprocesseur, auquel est appliqué le signal numérisé pour assurer une fonction de déclenchement long retard et une fonction de déclenchement court retard, et qui élabore un ordre de déclenchement du disjoncteur, lors d'un dépassement de seuils prédéterminés, ledit ordre étant temporisé en fonction de la valeur du signal,
- et un moyen de déclenchement du disjoncteur activé par ledit ordre de déclenchement.

Le développement des microprocesseurs a permis la mise en oeuvre, dans les déclencheurs de disjoncteurs électriques, des techniques numériques, dont la fiabilité et les possibilités de réglage et d'adaptation à un nombre important de fonctions sont bien connues. La grande dynamique des courants de défaut traités par le déclencheur, dont le rapport peut être de 30 et la précision de déclenchement imposée, impliquent des nombres représentatifs de valeur élevée, par exemple codés sur 12 bits. Les composants à 12 bits, notamment les convertisseurs analogiques digitaux à 12 bits sont chers et lents, et cet handicap limite les possibilités d'emploi de cette technologie.

La présente invention vise à permettre la réalisation d'un déclencheur statique numérique à grande dynamique faisant usage de composants de faible résolution.

Le déclencheur selon l'invention est caractérisé en ce qu'il comporte un circuit de calibrage ayant une entrée recevant ledit signal analogique et élaborant sur au moins quatre voies de sorties quatre signaux analogiques dont les valeurs sont dans un rapport prédéterminé, et un multiplexeur adressable dont quatre entrées sont reliées aux quatre voies du circuit de calibrage et dont la sortie est reliée à l'entrée du convertisseur analogique digital, le circuit de calibrage comportant au moins deux amplificateurs ayant un rapport de gains prédéterminé, la sortie de chaque amplificateur étant reliée d'une part à une entrée du multiplexeur et d'autre part à un pont diviseur dont le point milieu est relié à une autre entrée du multiplexeur, le multiplexeur étant piloté par le microprocesseur pour sélectionner l'une desdites voies, compatible avec la dynamique du convertisseur analogique digital, le signal de sortie dudit multiplexeur étant une mesure continue dudit signal analogique.

Selon un mode de réalisation préféré, l'entrée du convertisseur analogique digital à 8 bits est réliée à un multiplexeur à six entrées adressables par le microprocesseur. Quatre entrées sont réservées au signal de défaut de phase et deux entrées au signal de défaut de terre. Un circuit de protection à diodes limite la tension sur l'entrée du multiplexeur à une valeur compatible avec les caractéristiques du multiplexeur.

Le document US-A 4 470 092 décrit une protection de moteur à microprocesseur dans laquelle le signal de courant phase est appliqué à un circuit comportant deux amplificateurs de gains différents de manière à fournir deux sorties de sensibilité différentes. Ces deux sorties sont appliquées à deux entrées d'un multiplexeur et le microprocesseur lit séquentiellement toutes les entrées du multiplexeur et introduit les données présentes sur ces entrées dans une table pour un traitement ultérieur.

D'autres avantages et caractéristiques ressortiront plus clairement de la description qui va suivre d'un mode de mise en oeuvre de l'invention, donné à titre d'exemple non limitatif et représenté aux dessins annexés, dans lesquels :

- la figure 1 est un schéma bloc du déclencheur selon l'invention;

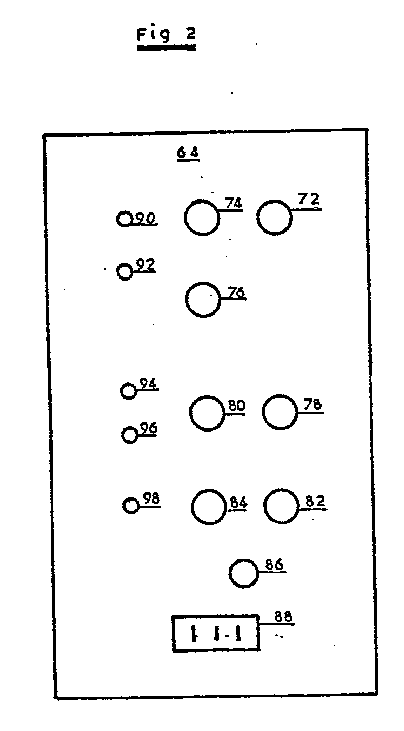

- la figure 2 montre la face avant du déclencheur avec les moyens de réglage et de signalisation;
- les figures 3 et 4 représentent les courbes de déclenchement de deux versions du déclencheur selon l'invention;
- la figure 5 est l'organigramme de la fonction de changement de calibre;
- la figure 6 montre la variation des signaux traités par le microprocesseur pour les fonctions à temps inverse;
- la figure 7 est l'organigramme de la fonction de blocage à la dernière crête;
- la figure 8 est l'organigramme de la fonction long retard à temps inverse;
- la figure 9 est l'organigramme de la fonction court retard à temps inverse;
- la figure 10 est l'organigramme de la fonction générale de déclenchement;
- la figure 11 est le schéma de détail de la chaîne de traitement analogique.

## Structure générale

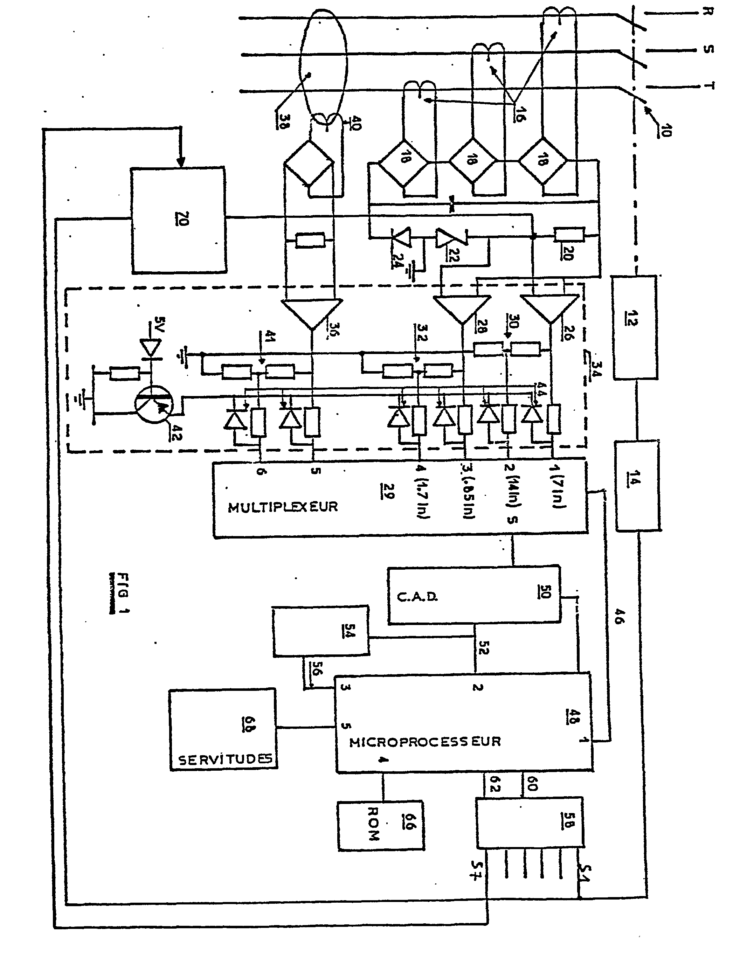

Sur la figure 1, un réseau de distribution électrique à quatre conducteurs RSTN d'alimentation d'une charge (non représentée) comporte un disjoncteur 10 susceptible d'interrompre le circuit en position d'ouverture. Le mécanisme 12 du disjoncteur 10 est piloté par un relais 14 polarisé, de commande de déclenchement du disjoncteur en cas de surcharge, de court-circuit ou de défaut à la terre. A chaque conducteur de phase RST est associé un transformateur de courant 16, qui délivre un signal proportionnel au courant parcourant le conducteur associé, le signal étant appliqué à un pont redresseur 18, à double alternance. Les sorties des trois ponts redresseurs 18 sont connectées en série dans un circuit, comprenant en série une résistance 20, une diode Zener 22 et une diode 24 pour faire apparaître aux bornes de la résistance 20 un signal de tension, proportionnel à la valeur maximale du courant parcourant les conducteurs RST et aux bornes des diodes 22, 24 une tension d'alimentation des circuits électroniques. Le signal de tension est appliqué aux entrées de deux amplificateurs 26, 28 de gains différents et la sortie de chaque amplificateur 26, 28 est reliée d'une part à une entrée 1, 3 d'un multiplexeur 29 et d'autre part à un pont diviseur 30, 32, dont le point milieu est connecté à une entrée 2, 4 du multiplexeur 29. L'ensemble, amplificateurs 26, 28 et ponts diviseurs 30, 32, appartient à un circuit de calibrage 34 du signal de tension, décrit en détail ci-dessous et repéré en trait discontinu sur la figure 1.

Le circuit de calibrage 34 comporte un troisième amplificateur 36, qui reçoit un signal engendré par le transformateur sommateur 38, dont les enroulements primaires sont constitués par les conducteurs NRST traversant un tore, portant un enroulement secondaire 40 qui délivre un signal en cas de défaut à la terre. La sortie de l'amplificateur 36 est connectée à l'entrée 5 du multiplexeur 29 et à un pont diviseur 41, dont le point milieu est relié à l'entrée 6 du multiplexeur 29. Les entrées 1 à 6 sont connectées en parallèle par des diodes 44 à l'émetteur d'un transistor 42 dont le collecteur est mis à la masse et dont la base est polarisée par une tension prédéterminée, par exemple de 5 Volts, correspondant à la valeur maximale applicable au multiplexeur 29. Il est facile de voir que le multiplexeur 29 reçoit des signaux représentatifs du courant de phase sur les quatre entrées 1 à 4 et des signaux représentatifs du courant de terre sur les deux entrées 5, 6. Ces signaux, notamment ceux de défaut de terre, peuvent bien entendu être élaborés d'une manière différente, par exemple à partir des signaux délivrés par les transformateurs de courant 16.

Le multiplexeur 29, par exemple un multiplexeur ADC0808 de la société National Semiconductor, est piloté par la ligne d'adresse et de contrôle 46 reliée aux sorties 1 d'un microprocesseur 48. En fonction de l'adresse fournie par le microprocesseur 48 le signal de l'une des entrées 1 - 6 du multiplexeur 29 est transmis par la sortie S du multiplexeur 29 à un convertisseur analogique digital 50 à 8 bits. Un bus 52 relie la sortie du convertisseur analogique digital 50 à une entrée, sortie 2 du microprocesseur 48. Un bloc 54 à huit commutateurs 72-86 multiplexés est relié au microprocesseur 48, d'une part par une connexion au bus 52 et d'autre part en 3 par une liaison d'adresse 56. Chaque commutateur 72-86 présente huit positions distinctes de réglage des paramètres de déclenchement, décrits par la suite.

Un registre 58 de sortie est relié au microprocesseur 48 par une liaison 60 à 6 bits et une liaison 62 à 1 bit pour une transmission sur 7 voies de sorties S1 à S7 des ordres de commande et de signalisation. La sortie S1 est reliée au relais 14 pour commander le déclenchement du disjoncteur 10, tandis que les sorties S2 à S6 sont connectées à des moyens d'affichage d'un panneau de commande 64, disposé sur la face avant du disjoncteur, notamment du bloc déclencheur contenant l'ensemble des circuits et composants de commande de déclenchement sur défaut. La sortie S7 est reliée à une commande de déclenchement analogique décrite ci-dessous.

Une memoire ROM 66 non volatile est reliée à une liaison 4 du microprocesseur 48 pour lui fournir le programme d'exécution ainsi que des données permanentes rangées sous forme de tableaux. Le programme enregistré correspond aux fonctions exécutées par le déclencheur. Un même déclencheur peut être conçu pour plusieurs gammes de fonctions et à chaque gamme correspond bien entendu un programme particulier. Le programme choisi peut être enregistré dans la mémoire ROM à la fabrication ou selon un mode de réalisation préférentiel, les différents programmes sont enregistrés dans différentes mémoires, le déclencheur étant personnalisé par le choix de la mémoire appropriée, lors du montage. Les servitudes, groupées dans un bloc 68 relié à une entrée 5 du microprocesseur 48, comprennent les circuits nécessaires au fonctionnement du microprocesseur, notamment l'horloge pour le séquencement du déroulement des instructions, les circuits d'initialisation et analogues.

Le microprocesseur est par exemple le modèle MC 146805 commercialisé par la société Motorola, qui contient les ressources standard, tels que l'unité de traitement, les interfaces, les mémoires RAM volatiles, l'unité de calcul.

A la commande numérique de déclenchement décrite ci-dessus est associé un bloc 70 de déclenchement instantané conventionnel, recevant le signal analogique de phase à la sortie des ponts redresseurs 18. Le bloc 70 compare ce signal à une valeur de seuil prédéterminée, pour émettre un ordre de déclenchement transmis au relais 14, lors du franchissement du seuil de la manière décrite en détail ci-dessous. Le bloc 70 assure une rapidité de déclenchement supérieure à celle du déclencheur numérique.

Il convient de noter que la figure 1 et la description correspondante contiennent les éléments essentiels au fonctionnement du déclencheur, les éléments accessoires des parties analogique et numérique, telles que les alimentations, les résistances et condensateurs de polarisation, les registres et mémoires des signaux fugitifs, ayant été omis pour ne pas surcharger inutilement la description.

## Caractéristiques de déclenchement

Le panneau de commande 64 comporte huit commutateurs 72-86 qui sont les huit commutateurs du bloc 54 illustré par la figure 1. Chaque commutateur à huit positions coopère avec un réseau résistif pour sélectionner l'une des huit valeurs distinctes, transmises au microprocesseur 48 lors de l'interrogation du bloc 54. Le panneau 64 présente de plus cinq diodes électroluminescentes ou voyants 90-98 et un connecteur 88 d'un bloc de test.

Le déclencheur peut être utilisé pour deux types de fonction, une fonction de protection sur défaut de phase et de terre et une fonction de protection sur défaut de phase et une fonction de délestage.

## 1) Protection de terre

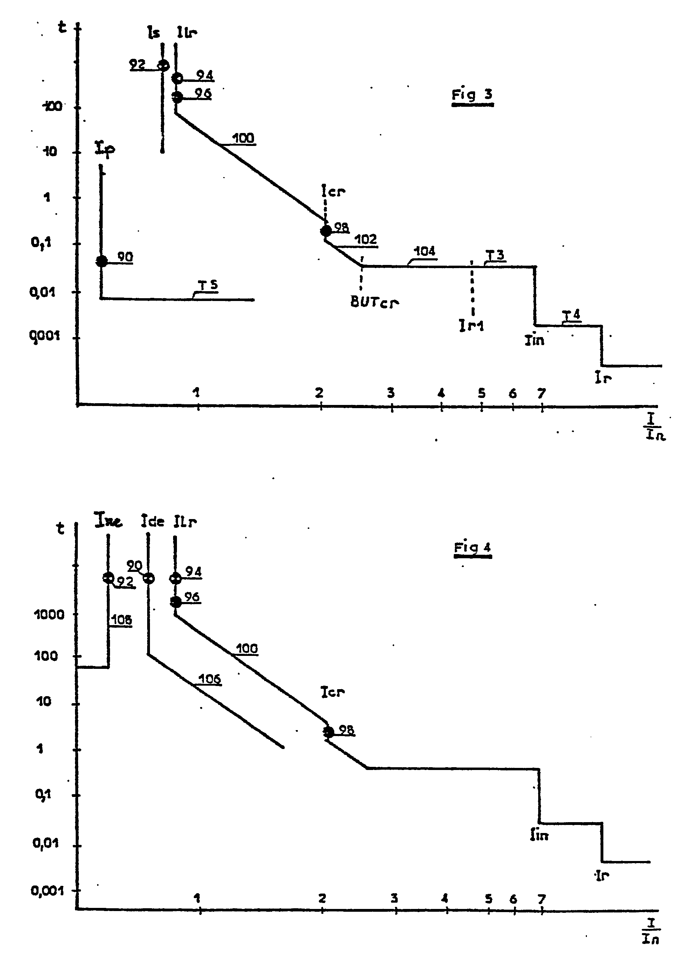

La figure 3 illustre, à échelle logarithmique, les courbes de déclenchement de la protection de phase et de terre.

Le seuil long retard ILR, c'est-à-dire l'intensité du courant au-delà de laquelle le cycle de déclenchement long retard est amorcé, est réglable par le commutateur 80. Le temps après lequel le disjoncteur déclenche est fonction de l'intensité du courant, la relation étant à temps inverse, $I^2t = T1 =$ constante, qui en coordonnées logarithmiques se traduit par le segment de droite inclinée 100. La temporisation long retard peut être réglée par le commutateur 78 qui modifie la constante T1.

Si l'intensité du courant franchit un deuxième seuil, en l'occurrence le seuil court retard ICR, le déclencheur démarre un cycle de déclenchement court retard, qui devance le déclenchement long retard. La courbe représentative du déclenchement court retard comprend deux segments successifs, le segment 102 à temps inverse, représenté par la relation $I^2t = T2$, et le segment 104 à temps constant T3. Le commutateur 84 réalise le réglage du seuil court retard ICR et le commutateur 82 celui de la temporisation constante court retard T3. Le passage de la caractéristique à temps constant à celle à temps inverse est fixé à une valeur constante du courant.

Un troisième seuil, IIN, supérieur au seuil ICR et réglable par le commutateur 86, provoque le cycle de déclenchement instantané, dont la temporisation T4 correspond au temps de réponse du déclencheur qui n'est pas réglable.

Au-dessus d'un quatrième seuil IR intervient en fonctionnement normal le déclencheur instantané analogique 70 pour une ouverture ultra-rapide du disjoncteur 10.

Sur la figure 3 apparaît de plus un seuil de surcharge Is, d'abscisse légèrement inférieure à celle du seuil long retard ILR, dont le franchissement signale la proximité du seuil long retard et le risque d'un déclenchement. Le commutateur 76 règle le seuil de surcharge Is. Ce signal de franchissement du seuil Is peut être utilisé pour une commande de délestage simplifiée, en l'occurrence de coupure d'un circuit non prioritaire. Dès que le courant redevient inférieur au seuil Is, la sortie est désactivée et le circuit délesté est rebranché.

La courbe représentative de la protection de terre comprend un seuil protection de terre IP et une temporisation T5 à temps constant. Le seuil IP est réglable par le commutateur 74 et la temporisation T5 par le commutateur 72.

L'état du déclencheur à un instant donné est visualisé sur le panneau 64 par les diodes électroluminescentes ou voyants 90-98, représentées sur les courbes de la figure 3. Le voyant 90, représenté par un rond plein sur le seuil de protection de terre IP, est allumé lors d'un déclenchement du disjoncteur 10 sur un défaut de terre. Il reste allumé jusqu'au moment d'une intervention externe, par exemple de réarmement. Le voyant 92, représenté par quatre secteurs circulaires alternativement blancs et noirs, s'allume lors du franchissement du seuil de surcharge Is et s'éteint automatiquement dès que le courant redevient inférieur à ce seuil. Le franchissement du seuil long retard ILR est signalé par le voyant 94, qui s'éteint si la valeur du courant diminue en-dessous de ce seuil avant la fin de la temporisation. Un déclenchement sur surcharge, commandé par le circuit long retard, est signalé par le voyant 96 tandis qu'un déclenchement court retard et instantané provoque l'allumage du voyant 98. L'extinction des voyants 96, 98 nécessite une action externe. Ces techniques de réglage et d'affichage sont bien connues des spécialistes, et il est inutile de les décrire en détail. La précision de réglage peut être accrue par l'emploi de commutateurs 72-86 ayant un plus grand nombre de positions ou selon un mode préférentiel par une combinaison de deux moyens de réglage, plus particulièrement du commutateur 76 et des autres commutateurs de réglage. Une telle combinaison donne 64 crans de réglage, le commutateur 76 jouant un double rôle, rendu possible par un écart suffisant entre les seuils Is et ILR. Il est concevable d'adjoindre des commutateurs indépendants pour réaliser ce type de combinaisons.

## 2) Délestage

Le même appareil est utilisable pour une autre version de protection, illustrée par les courbes de la figure 4. Dans cette version la courbe de déclenchement de protection de phase est identique à celle illustrée par la figure 3, mais la protection de terre n'est pas assurée. Les commutateurs 72, 74 et les voyants 90, 92 associés à cette fonction sont disponibles et le logiciel est modifié pour assurer une fonction de délestage et de relestage illustrée par les courbes 106, 108. Le seuil de délestage IDE, inférieur au seuil long retard ILR, est réglable par le commutateur 72, le voyant 90 signalant une opération de délestage. Le seuil de relestage IRE, différent et inférieur au seuil de délestage IDE, est réglable par le commutateur 74 et signalé par le voyant 92. La courbe de délestage 106 est à temps inverse parallèle à la courbe 100 de protection long retard, tandis que la courbe 108 de relestage est à temps constant. Les réglages doivent toujours assurer un délestage avant un déclenchement long retard.

## Circuit de calibrage :

Les différentes protections et fonctions du déclencheur nécessitent la mesure du courant avec une grande dynamique. En globalisant on arrive à une dynamique de 0,4 In (In étant le courant nominal) pour le seuil long retard le plus bas et à 12 In pour le seuil de déclenchement instantané le plus élevé, soit un rapport de 30. Pour obtenir une précision suffisante, notamment une résolution de 1 %, il faut que le nombre représentant 0,4 In ait au moins la valeur 100, ce qui équivaut à une valeur de 3000 pour l'intensité maximale de 12 In. Le nombre 3000 nécessite un codage sur 12 bits, mais un convertisseur analogique digital à 12 bits est lent et cher.

Le circuit de calibrage 34 selon l'invention adapte la dynamique de la chaîne analogique à celle du convertisseur analogique digital 50 à 8 bits tout en respectant la précision de 1 %. A cet effet, le gain de l'amplificateur 26 est choisi pour transformer un signal analogique, correspondant à un courant maximal de 14 In, appliqué sur son entrée en un signal maximal, par exemple de 5 Volts, apparaissant sur la voie 2 d'entrée du multiplexeur 29 qui sera numérisé par la valeur 256 à la sortie du convertisseur analogique digital 50. Le pont diviseur 30, d'un rapport 2, applique sur la voie 1 un signal double et la valeur maximale de 5 Volts n'est pas dépassée tant que le signal analogique à l'entrée de l'amplificateur 26 reste inférieur à 7 In. D'une manière analogue, l'amplificateur 28 applique à l'entrée 4 du multiplexeur 29 un signal maximal pour une valeur de 1,7 In du courant et à l'entrée 3 un signal maximal pour une valeur de 0,85 In. Il est facile de voir que le rapport des gains des amplificateurs 26, 28 est de 8. Le microprocesseur 48 sélectionne l'une des voies 1 à 4 en fonction de la valeur du courant, en l'occurrence la voie 2 pour un courant compris entre 7 et 14 In, la voie 1 pour un courant compris entre 1,7 et 7 In, la voie 4 pour un courant compris entre 0,85 et 1,7 In, et la voie 3 pour un courant inférieur à 0,85 In. Le microprocesseur 48 multiplie la numérisation par un facteur tenant compte de la voie sélectionnée, pour rétablir la grandeur initiale du signal.

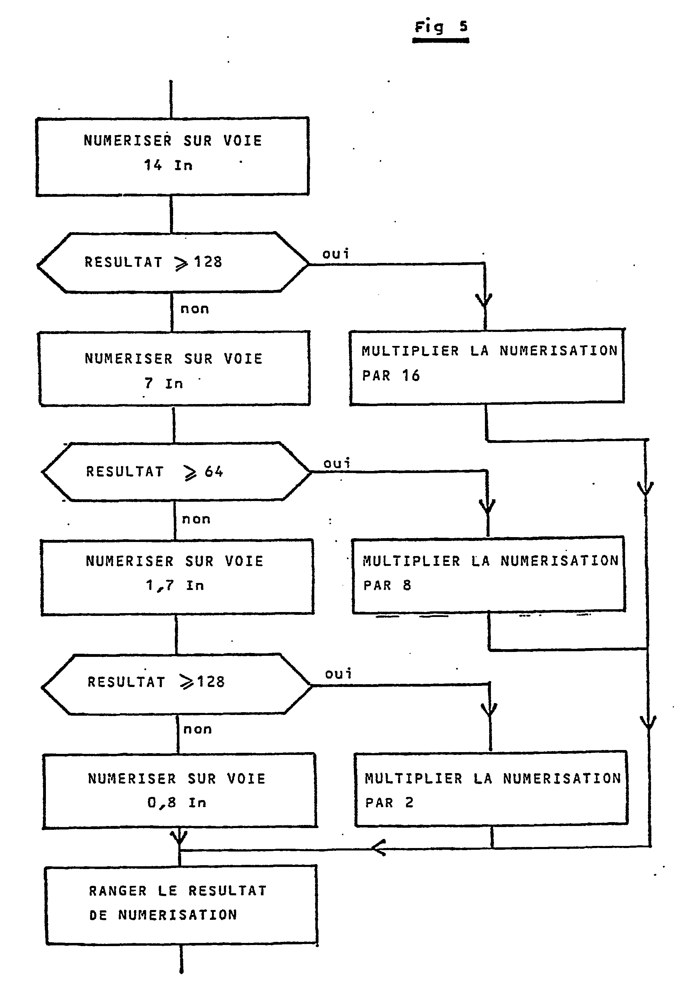

Le fonctionnement de ce circuit de calibrage ressort de l'organigramme illustré par la figure 5 :

Le microprocesseur 48 active la voie 2 (14 In) et numérise le signal correspondant. Si le résultat est supérieur à la valeur 128 la numérisation est multipliée par 16 et rangée dans une mémoire RAM. Si le résultat est inférieur à 128, la numérisation est effectuée sur la voie 1 (7 In) et lorsque le résultat est supérieur à 64 on multiplie la numérisation par 8 et on énregistre le résultat dans la mémoire. Lorsque le résultat est inférieur à 64 on numérise sur la voie 4 (1,7 In) et si la numérisation est supérieure à 128 on la multiplie par 2 avant de la ranger dans la mémoire. Pour un résultat inférieur à 128 la numérisation est effectuée sur la voie 3 (0,85 In) et le résultat est rangé directement dans la mémoire. La dynamique du convertisseur analogique digital 50 à 8 bits est ainsi adaptée à la gamme de variation des courants de 0,4 In à 12 In en assurant une précision suffisante. Il est à noter que le nombre de voies et par là le nombre de calibres peut être augmenté pour une précision ou une amplitude de variation supérieure ou inversement ce nombre de voies peut être diminué dans le cas contraire.

En se référant à la figure 1, on voit que le signal de défaut de terre est susceptible d'être appliqué aux 2 voies 5 et 6 seulement. La dynamique de ce signal est inférieure à celle du défaut de phase et les deux calibres sont suffisants. La sélection des deux voies 5, 6 par le microprocesseur 48 s'effectue de la manière décrite ci-dessus, qu'il est inutile de rappeler.

L'emploi selon l'invention du multiplexeur 29 et du circuit de calibrage 34 réalise d'une manière simple l'adaptation des dynamiques de la chaîne analogique et de la chaîne numérique.

Echantillonnage, blocage à la dernière crête :

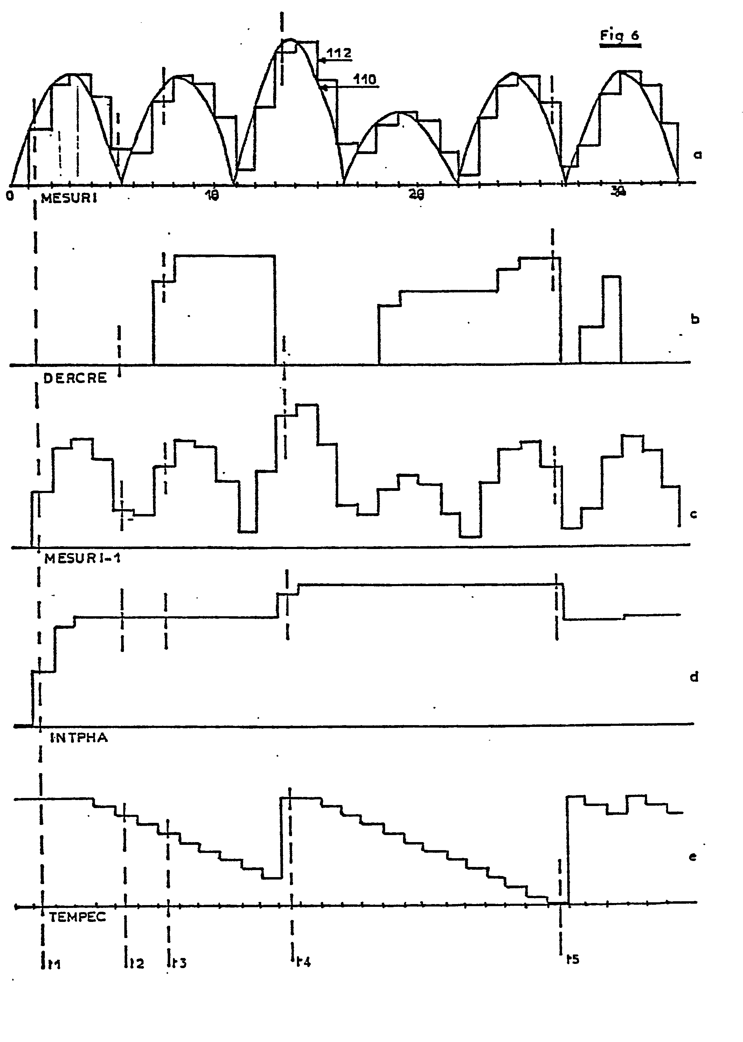

Le passage de la chaîne analogique à la chaîne numérique se traduit par un échantillonnage des signaux traités. La valeur du signal numérique reste constante pendant la durée de l'échantillon et cette durée est déterminée par la période d'échantillonnage fixée par le microprocesseur 48. Cette durée, par exemple de 1,84 millisecondes, doit être comparée à la durée de 10 millisecondes d'une alternance du signal alternatif et il est clair que l'erreur introduite par l'échantillonnage n'est pas négligeable. Le chronogramme selon la figure 6a montre d'une part la courbe de variation 110 d'un signal analogique redressé à double alternance, en fonction du temps et d'autre part, la courbe 112 de l'échantillon correspondant disponible à la sortie du convertisseur analogique digital 50. Ces courbes 110, 112 font ressortir l'erreur précitée, notamment sur la valeur crête des signaux, qui peut atteindre 10 %. L'importance de cette valeur crête, qui détermine le déclenchement et la temporisation au déclenchement, ressort de l'exposé précédent. L'erreur sur la mesure de la valeur crête se répercute sur la temporisation de déclenchement, et cette imprécision est particulièrement gênante pour la sélectivité de déclenchement. On sait que dans un réseau de distribution électrique plusieurs disjoncteurs sont connectés en série, les caractéristiques de déclenchement de ces disjoncteurs étant échelonnées de manière à assurer une sélectivité de déclenchement, seul le disjoncteur directement en amont du défaut s'ouvrant pour éliminer le défaut, les autres disjoncteurs restant fermés pour alimenter les branches saines du réseau. La sélectivité chronométrique est réalisée lorsque le temps de non-déclenchement du disjoncteur amont est supérieur au temps de déclenchement, c'est-à-dire au temps total de coupure du disjoncteur aval. Les courbes de déclenchement et de non-déclenchement, du type illustré par les figures 3 et 4, des disjoncteurs en série, doivent être décalées suffisamment pour éviter toute intersection de ces courbes. Le spécialiste connait bien ces problèmes de sélectivité et l'intérêt d'un écart aussi faible que possible entre les temps de déclenchement et de non-déclenchement pour interrompre le plus rapidement possible le courant de défaut en maintenant l'alimentation des parties saines de l'installation.

La précision de la valeur crête échantillonnée est accrue en bloquant et en mémorisant la dernière crête et en traitant cette valeur bloquée à la dernière crête pour assurer les fonctions de protection.

Dans une mémoire RAM sont mémorisées les cinq valeurs représentées par les courbes des fig. 6 a, b, c, d, e, en l'occurrence : MESURI qui est la MESURe de l'Intensité de l'échantillon traité à un instant t.

MESURI-1 qui est la MESURe de l'Intensité de l'échantillon traité à un instant t-1.

INTPHA qui est la valeur échantillonnée de l'INTensité de PHAse , bloquée à la dernière crête.

DERCRE qui est la valeur de la DERnière CREte inférieure à la valeur INTPHA.

TEMPEC qui est le TEMPs ECoulé géré en compte à rebours.

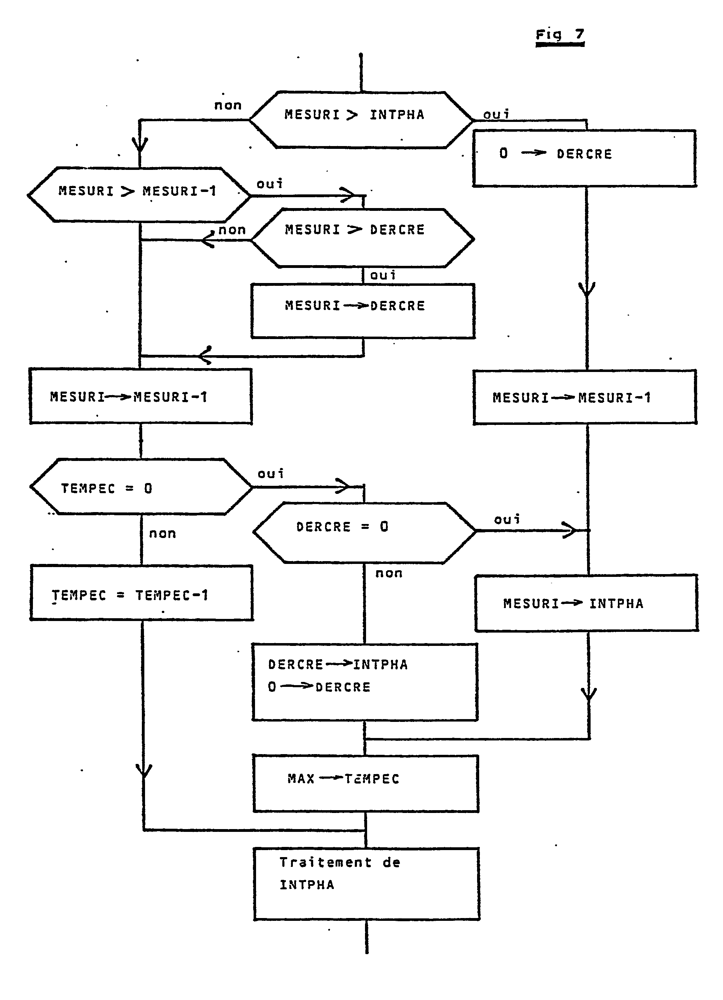

La figure 7 représente l'organigramme de traitement : Au temps t1 le microprocesseur 48 appelle et traite le signal échantillonné de mesure de l'intensité MESURI délivré par le convertisseur analogique digital 50 (fig. 6a). Ce signal MESURI est comparé au signal INTPHA (fig. 6d) d'intensité de phase mémorisé, bloqué à la dernière crête. Si MESURI est supérieur à INTPHA la valeur crête est croissante et la valeur DERCRE (fig. 6b), qui représente la valeur de la dernière crête inférieure au signal INTPHA, est mise à zéro.

La valeur MESURI est enregistrée dans la mémoire MESURI-1 (fig. 6c) ainsi que dans la mémoire INTPHA (fig. 6d). La valeur TEMPEC (fig. 6e), qui gère le compte à rebours, est mise au maximum et la valeur INTPHA est traitée par le microprocesseur 48 de la manière susmentionnée pour assurer les fonctions de protection.

Si la mesure MESURI est inférieure à l'intensité INTPHA, par exemple au temps t2 correspondant à la phase descendante du signal analogique, on compare les mesures MESURI et MESURI-1. Au temps t2 la mesure MESURI n'est pas supérieure à MESURI-1 et on introduit la valeur MESURI dans la mémoire MESURI-1. Puis on vérifie si TEMPEC est égale à zéro, ce qui n'est pas le cas au temps t2 et on décrémente TEMPEC. L'intensité INTPHA est traitée pour assurer la fonction de protection.

Au temps t3 correspondant à la phase montante de l'alternance suivante la mesure MESURI est toujours inférieure à l'intensité INTPHA, mais elle est supérieure à MESURI-1 (phase croissante). On compare la mesure MESURI à la crête DERCRE et comme MESURI est supérieure à DERCRE on introduit la valeur MESURI dans la mémoire avant de poursuivre le programme précité d'introduction de la valeur MESURI dans la mémoire MESURI-1 et les autres opérations. Dans l'exemple selon la figure 6, la valeur crête échantillonnée de la deuxième alternance est inférieure à celle de la première alternance et on voit que la valeur mémorisée INTPHA retenue pour le traitement est la valeur crête la plus élevée. En réalité les deux alternances du signal analogique sont identiques, la différence des valeurs crêtes échantillonnées résultant de l'échantillonnage. Par le blocage à la dernière crête, en l'occurrence en retenant la première valeur de crête la plus élevée à la place de la seconde, l'erreur est notablement réduite. La valeur de la deuxième crête est stockée temporairement dans la mémoire DERCRE.

Au temps t4 de la troisième alternance, MESURI dépasse à nouveau INTPHA et de la manière décrite pour la première alternance DERCRE est remise à zéro, MESURI remplaçant la valeur MESURI-1 et INTPHA dans la mémoire. TEMPEC est remise à la valeur maximale et la nouvelle valeur crête échantillonnée INTPHA est bloquée.

L'amplitude des alternances 4 et 5 est inférieure à celle de la troisième alternance et le compte à rebours se poursuit normalement jusqu'au temps t5 de passage à zéro. En se référant à l'organigramme on voit que si TEMPEC est égale à zéro et que DERCRE est différente de zéro, ce qui est le cas en t5, la valeur DERCRE remplace dans la mémoire la valeur INTPHA et DERCRE est mise à zéro.

Il est facile de comprendre que pendant la durée du compte à rebours, TEMPEC qui est par exemple de 22 millisecondes, la valeur traitée, mémorisée dans INTPHA, correspond à la valeur échantillonnée bloquée à la dernière crête, le compte à rebours étant recommencé à chaque nouveau dépassement de la valeur crête. Cette valeur bloquée tient compte d'au moins deux valeurs crêtes pour un courant alternatif de 50 Hz dont la durée de chaque alternance est de 10 millisecondes. Si pendant les 22 millisecondes les valeurs crêtes restent inférieures à la valeur crête bloquée INTPHA, cette dernière est remplacée par la valeur DERCRE qui est la dernière valeur crête bloquée inférieure à INTPHA. A la croissance des valeurs crêtes le signal traité tient immédiatement compte de cette augmentation tandis qu'à la décroissance intervient une temporisation de 22 millisecondes. Le blocage à la dernière crête n'a aucune influence sur le déclenchement instantané, mais pour le déclenchement court retard et long retard il permet une réduction de l'erreur d'échantillonnage. La temporisation de 22 millisecondes peut provoquer un déclenchement injustifié, mais l'influence est faible compte tenu des temporisations de l'ordre de la seconde de tels déclenchements. Les 22 millisecondes sont un compromis entre une plus grande précision sur la valeur crête et une différence aussi faible que possible entre le temps de déclenchement et de non déclenchement. Il est clair que la temporisation peut être augmentée pour inclure un plus grand nombre d'alternances et accroître ainsi la précision, notamment lors d'une mesure ou d'un affichage de la valeur crête indépendamment de la commande du disjoncteur. Le procédé de blocage à la dernière crête a été décrit ci-dessus pour un défaut de phase, mais il est utilisé avec les mêmes avantages pour la protection de terre.

Image thermique du déclenchement long retard.

La fonction inverse $I^2t$ = constante, représentée par la droite 100 de la figure 3, de déclenchement long retard, équivaut à celle de la bilame d'un déclencheur conventionnel qui s'échauffe lorsque le courant est supérieur à un premier seuil et se refroidit si le courant est inférieur à ce seuil. Cette fonction inverse est réalisée par le calcul d'une image thermique d'une bilame représentée par une valeur numérique mémorisée. Pendant la phase d'échauffement cette valeur mémorisée est incrémentée d'un facteur prédéterminé pour traduire l'échauffement, tandis que cette valeur mémorisée est décrémentée pendant une phase de refroidissement. Le déclenchement intervient lorsque la valeur mémorisée dépasse un seuil. Cette image thermique permet de tenir compte de l'état antérieur et de traduire fidèlement la température de la bilame ou de l'appareil protégé par le disjoncteur.

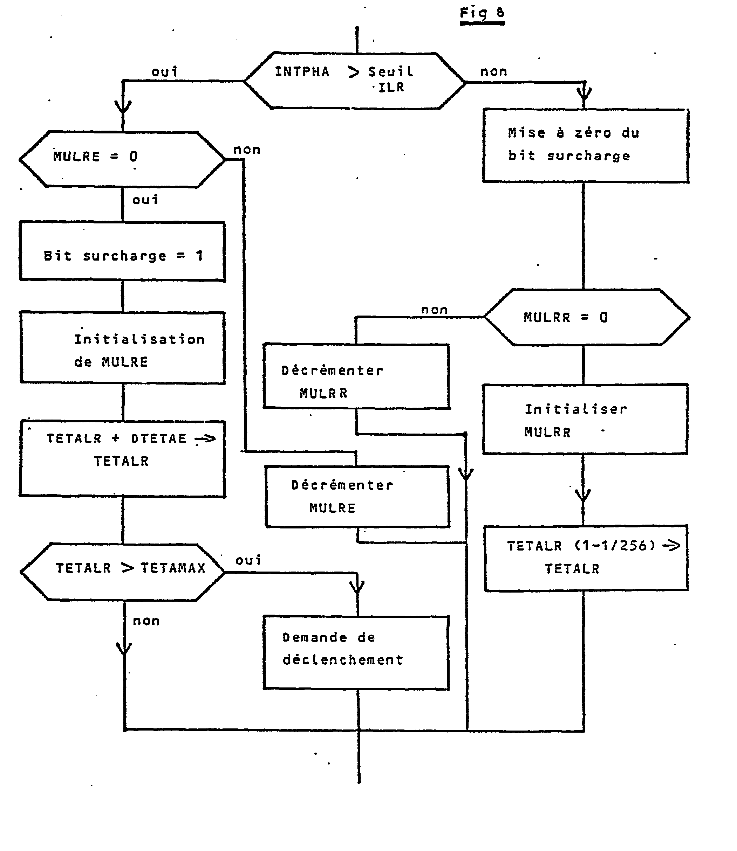

La fonction inverse long retard est réalisée par le programme du microprocesseur 48, illustré par la figure 8 et décrit ci-dessous. L'intensité INTPHA est la valeur précitée de l'INTensité de PHAse bloquée à la dernière crête. Le microprocesseur 48 compare la valeur INTPHA au seuil ILR affiché par le commutateur 80. Si l'intensité INTPHA n'est pas supérieure au seuil ILR le bit surcharge, qui alimente le voyant 94, est mis à zéro, le voyant 94 étant ainsi éteint. On contrôle si un facteur multiplicateur MULRR (MUltiplicateur Long Retard Refroidissement), stocké dans la mémoire RAM, est égal à zéro. Si non, le multiplicateur MULRR est décrémenté et on boucle le programme. Si le multiplicateur MULRR est égal à zéro ce multiplicateur est initialisé à un nombre déterminé par la position du commutateur 78 de temporisation long retard et une valeur TETALR (Température TETA d'une bilame simulée pour la fonction Long Retard) enregistrée dans la mémoire RAM, est multipliée par un facteur de réduction représentatif du refroidissement de la bilame équivalente, la nouvelle valeur TETALR étant substituée à l'ancienne dans la mémoire. Cette séquence correspond à un refroidissement de la bilame.

Une phase d'échauffement démarre lorsque l'intensité INTPHA devient supérieure au seuil ILR. D'une manière analogue à celle de la phase de refroidissement, on vérifie si un facteur multiplicateur MULRE (MUltiplicateur Long Retard Echauffement) est égal à zéro. Si non, le multiplicateur MULRE est décrémenté et on boucle le programme. Si le multiplicateur MULRE est égal à zéro le bit surcharge passe à la valeur 1 pour allumer le voyant 94 et le multiplicateur MULRE est initialisé à un nombre déterminé par le commutateur 78. Une unité arithmétique et logique du microprocesseur 48 exécute une opération de mise au carré du courant et de calcul d'une valeur DTETAE (Delta TETA Echauffement) représentative de l'échauffement, qui est ajoutée à la valeur antérieure TETALR mémorisée pour déterminer la nouvelle température image. Si cette dernière est supérieure à une valeur maximale TETAMAX le bit de déclenchement passe à 1 et provoque le déclenchement du disjoncteur. Sinon on boucle le programme.

Le rôle des facteurs multiplicateurs MULRR et MULRE est le réglage du rythme d'incrémentation ou de décrémentation de l'image thermique numérisée. On voit qu'un réglage des multiplicateurs au nombre trois provoque une opération, une fois sur trois, qui se traduit par une temporisation trois fois plus longue. Ces multiplicateurs permettent un choix de la courbe de déclenchement long retard.

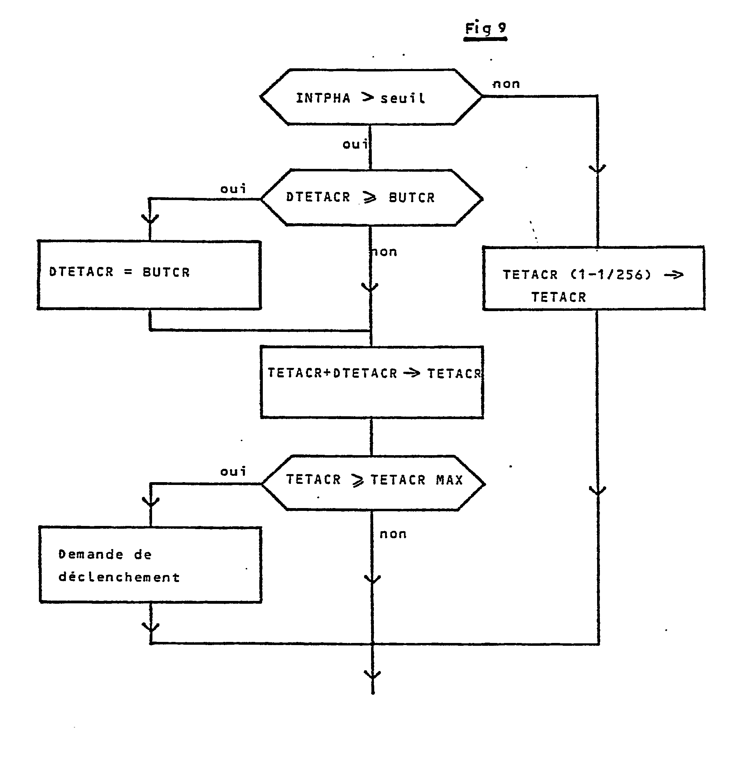

La fonction à temps inverse court retard est réalisée d'une manière analogue par l'organigramme selon la figure 9. Si l'intensité INTPHA est inférieure au seuil ICR, la température d'une bilame simulée pour la fonction court retard TETACR est multipliée par un facteur de·réduction représentatif du refroidissement et la nouvelle valeur est introduite dans la mémoire RAM. Si l'intensité INTPHA dépasse le seuil ICR on vérifie si le carré du courant échantillonné bloqué à la dernière crête DTETACR, qui correspond à l'échauffement, est supérieur à une valeur maximale donnée, de butée BUTCR, correspondant au passage du déclenchement à temps inverse au déclenchement à temps constant de la fonction court retard. Si non, la valeur TETACR est remplacée dans la mémoire par la valeur incrémentée TETACR + DTETACR et on vérifie si cette nouvelle valeur TETACR dépasse le seuil de déclenchement TETACRMAX. Lors d'un dépassement un ordre de déclenchement est transmis au relais 14 assurant la protection court retard à temps inverse. Lorsque l'échauffement DTETACR est supérieur à la valeur de butée BUTCR cette dernière valeur est substituée à DTETACR et additionnée à la valeur TETACR de la manière précitée pour provoquer un déclenchement ou non selon que la nouvelle valeur TETACR représentant la températeur simulée de la bilame est supérieure ou non au seuil TETACRMAX.

Organisation du logiciel

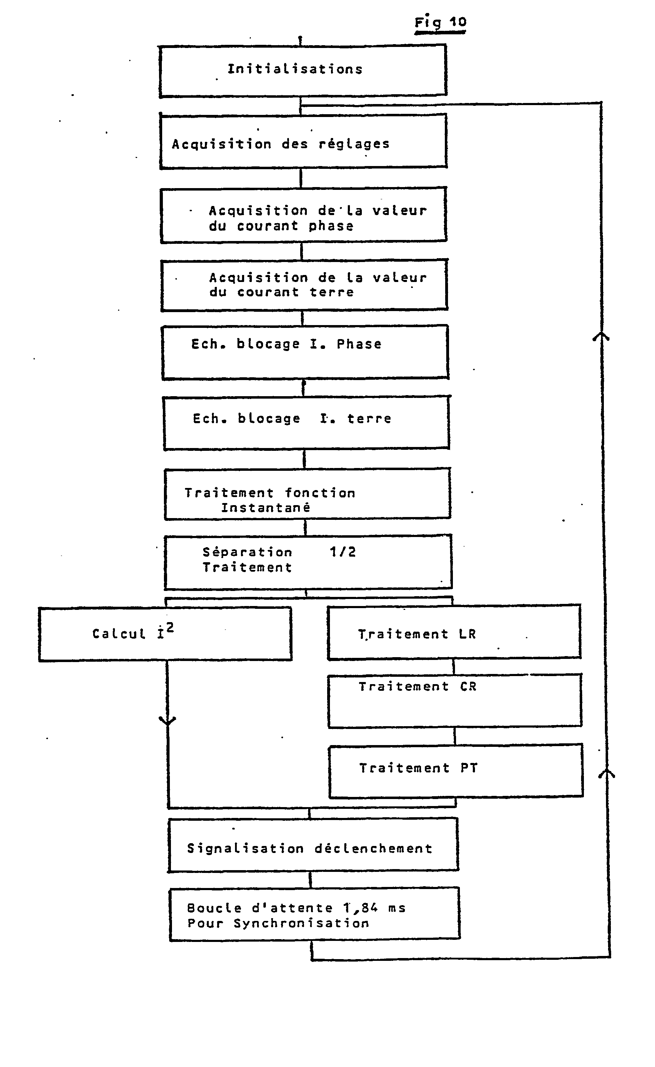

La figure 10 représente le programme principal du déclencheur. Après les initialisations le microprocesseur 48 acquiert les paramètres de réglage introduits par les commutateurs 72-86 du bloc 54. Puis il lit la valeur du courant de phase et du courant de terre fournies par le multiplexeur 29, toutes ces données étant enregistrées dans la mémoire RAM. Le microprocesseur 48 procède alors à l'échantillonnage blocage à la dernière crête du courant de phase et du courant de terre de la manière décrite ci-dessus. Il traite ensuite la fonction instantanée en vérifiant si le courant de phase bloqué à la dernière crête dépasse le seuil de déclenchement instantané IIN ou non. Le programme est alors subdivisé en deux branches parcourues alternativement, la première consistant dans le calcul du carré du courant nécessaire à la détermination de la fonction à temps inverse et la seconde dans le traitement successif de la fonction long retard, court retard et protection de terre. Cette séparation des traitements permet une réduction de la durée du programme à une valeur de 1,84 millisecondes. Les instructions de signalisation et de déclenchement sont émises et un nouveau cycle est exécuté après une attente de synchronisation respectant la durée du cycle de 1,84 millisecondes.

Déclenchement instantané analogique :

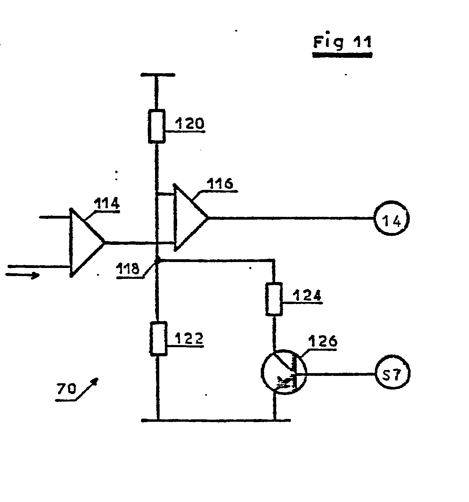

Le fonctionnement du déclencheur à traitement numérique susmentionné est imparfait lors d'un court-circuit important et pendant la période de démarrage. Le traitement numérique est rapide, mais non instantané et ce retard peut dans certains cas être à l'origine de la destruction de l'installation protégée et/ou du disjoncteur. La chaîne de traitement numérique est shuntée par une chaîne de traitement analogique pour assurer une protection instantanée additionnelle. Le signal redressé, proportionnel au courant dans les conducteurs RST et présent à la sortie des ponts redresseurs 18, est traité dans le bloc analogique 70, pour engendrer un ordre de déclenchement instantané transmis au relais 14 lors d'un dépassement de seuils prédéterminés. En ce référant plus particulièrement à la figure 11, on voit que le signal appliqué à l'entrée du bloc 70 est amplifié dans un amplificateur opérationnel 114 dont la sortie est reliée à une entrée d'un comparateur 116, dont la sortie est reliée au relais 14. L'autre entrée du comparateur 116 est reliée au point 118 d'un pont diviseur à deux résistances 120, 122 en série. Parallèlement à la résistance 122 est connecté un circuit de shuntage constitué par une résistance 124 et un transistor 126 en série. Le transistor 126 est piloté par un ordre émis sur la sortie S7 du registre 58 pour interrompre ou fermer le circuit de shuntage. Il est facile de voir que le pont diviseur 120, 122 et le circuit de shuntage 124, 126 déterminent deux seuils IR, IR1 différents selon le blocage ou la conduction du transistor 126, le comparateur 116 comparant le signal à ces seuils pour émettre l'ordre de déclenchement lors du franchissement de ces seuils. En se référant à la figure 3, on voit que le seuil IR est supérieur au seuil de déclenchement instantané numérique IIN, le seuil IR1 étant légèrement inférieur ou égal au seuil IIN. Le seuil IR est sélectionné lors d'une activation de la sortie S7, en l'occurrence lors d'un fonctionnement de la chaîne numérique de traitement. Si la chaîne numérique n'est pas activée le seuil d'intervention de la chaîne analogique est réduit à la valeur IR1.

Le déclencheur analogique instantané fonctionne de la manière suivante :

En fonctionnement normal le déclencheur analogique n'intervient pas, les surcharges et court-circuit étant traités par le déclencheur numérique. Le seuil de fonctionnement du déclencheur analogique est réglé à la valeur IR et seul un court-circuit d'une valeur exceptionnelle supérieure au seuil IR, est traité par les deux chaînes, la chaîne analogique devançant la chaîne numérique et commandant le déclenchement. Ce déclenchement rapide assure la protection du disjoncteur.

En période de démarrage, notamment lors de la fermeture du disjoncteur, la chaîne numérique est inactive pendant une courte période de mise en route et le seuil du déclencheur analogique 70 est automatiquement réduit à la valeur inférieure IR1 par l'absence du signal sur la sortie S7. En cas de court-circuit, en particulier lors d'une fermeture sur défaut, le déclencheur analogique intervient dès le dépassement du seuil IR1 en protégeant à la fois le disjoncteur et l'installation. La chaîne analogique supplée de plus à une défaillance de la chaîne numérique et accroît la fiabilité du déclencheur sans complication notable. Il est à noter que le changement de seuil du déclencheur analogique peut être réalisé d'une manière différente.

Le déclencheur allie les avantages des déclencheurs analogiques et des déclencheurs numériques sans complications notables.

**Revendications**

1. Déclencheur statique numérique pour un disjoncteur électrique comprenant:
   - des capteurs (16) qui engendrent des signaux analogiques proportionnels aux courants parcourant les conducteurs (RST) protégés par le disjoncteur,
   - des circuits redresseurs 18) pour redresser lesdits signaux et délivrer un signal continu analogique représentatif de la valeur maximale desdits courants,
   - un convertisseur analogique digital (50) ayant une entrée recevant ledit signal analogique et une sortie délivrant un signal numérisé échantillonné correspondant,
   - un ensemble de traitement numérique à microprocesseur (48), auquel est appliqué le signal numérisé pour assurer une fonction de déclenchement long retard (LR) et une fonction de déclenchement court retard (CR) et qui élabore un ordre de déclenchement du disjoncteur, lors d'un dépassement de seuils prédéterminés, ledit ordre étant temporisé en fonction de la valeur du signal,
   - et un moyen de déclenchement (12, 14) du disjoncteur activé par ledit ordre de déclenchement, caractérisé en ce que ledit ensemble de traitement numérique pour la fonction de déclenchement long retard (LR) comporte un circuit (34) de calibrage ayant une entrée recevant ledit signal analogique et élaborant sur au moins quatre voies de sorties (1–6) quatre signaux analogiques dont les valeurs sont dans un rapport prédéterminé, et un multiplexeur adressable (29) dont quatre entrées sont reliées aux quatre voies du circuit de calibrage (34) et dont la sortie est réliée à l'entrée du convertisseur analogique digital (50), le circuit de calibrage (34) comportant au moins deux amplificateurs (26, 28) ayant un rapport de gains prédéterminé, la sortie de chaque amplificateur étant reliée d'une part à une entrée du multiplexeur (1, 3) et d'autre part à un pont diviseur (30, 32) dont le point milieu est relié à une autre entrée (2, 4) du multiplexeur (29), le multiplexeur étant piloté par le microprocesseur (48) pour sélectionner l'une desdites voies, compatible avec la dynamique du convertisseur analogique digital, le signal de sortie dudit multiplexeur étant une mesure continue dudit signal analogique.

2. Déclencheur selon la revendication 1, caractérisé en ce que le convertisseur analogique digital (50) est à 8 bits, le rapport des gains des deux amplificateurs du circuit de calibrage étant de 8 ou 10.

3. Déclencheur selon l'une des revendications 1 et 2, caractérisé en ce que le microprocesseur (48) active la voie (1–6) correspondant à la valeur la plus élevée, numérise sur cette voie et mémorise la valeur lorsque la numérisation dépasse une valeur prédéterminée, la numérisation étant effectuée sur l'autre voie de valeur inférieure si la numérisation est inférieure à ladite valeur prédéterminée.

4. Déclencheur selon la revendication 3, caractérisé en ce que la numérisation est multipliée par un facteur prédéterminé correspondant à la démultiplication du signal analogique dans le circuit de calibrage (34) sur la voie (1–6) activée par le microprocesseur (48).

5. Déclencheur selon l'une des revendications 1 à 4, caractérisé en ce qu'il comporte un circuit de calibrage (34) d'un signal analogique d'un courant de défaut de phase et d'un signal analogique de défaut de terre, les sorties du circuit de calibrage (34) étant reliées à différentes entrées (1–6) du multiplexeur (29) piloté par le microprocesseur (48).

6. Déclencheur selon l'une quelconque des revendications précédentes, caractérisé en ce qu'un circuit de protection à diodes (44) est associé aux différentes entrées (1–6) du multiplexeur (29) pour limiter la tension appliquée auxdites entrées à une valeur compatible avec les caractéristiques du multiplexeur.

## Claims

1. Digital solid-state trip unit for an electrical circuit breaker comprising:
   - current sensors (16) which generate analog signals proportional to the currents flowing through the conductors (RST) protected by the circuit breaker,
   - rectifier circuits (18) to rectify said signals and to deliver a continuous analog signal representative of the maximum value of said currents,
   - an analog-to-digital converter (50) having an input receiving said analog signal and an output delivering a corresponding sampled digitized signal,
   - a microprocessor-based digital processing unit (48), to which the digitized signal is applied to provide a long delay (LR) trip function and a short delay (CR) trip function and which generates a circuit breaker tripping order, when preset pick-ups are exceeded, said order being time delayed in terms of the value of the signal,
   - and a circuit breaker trip means (12, 14) activated by said tripping order,

characterized in that said digital processing unit for the long delay (LR) trip function comprising a calibration circuit (34) with an input receiving said analog signal and generating on at least four output channels (1–6) four analog signals, the values of which are of predetermined ratio, and an address multiplexer (29), four inputs of which are connected to the four channels of the calibration circuit (34) and the output of which is connected to the input of the analog-to-digital converter (50), the calibration circuit (34) comprising at least two amplifiers (26, 28) with a predetermined gain ratio, the output of each amplifier being connected on the one hand to an input of the multiplexer (1, 3) and on the other hand to a divider bridge (30, 32), whose midpoint is connected to another input (2, 4) of the multiplexer (29), the multiplexer being controlled by the microprocessor (48) in order to select one of said channels, compatible with the dynamic of the analog-to-digital converter, the output signal of said multiplexer being a continuous measure of said analog signal.

2. Trip unit according to claim 1, characterized in that said analog-to-digital converter (50) has 8 bits, the gain ratio of the two amplifiers of the calibration circuit being 8 or 10.

3. Trip unit according to one of claims 1 and 2, characterized in that said microprocessor (48) activates the channel (1–6) corresponding to the highest value, digitizes on this channel and memorizes the value when the digital value exceeds a predetermined value, the digitalization being executed on the other channel of a lower value if the digital value is lower than said predetermined value.

4. Trip unit according to claim 3, characterized in that said digital value is multiplied by a predetermined factor corresponding to the demultiplication of the analog signal in the calibration circuit (34) on the channel (1–6) activated by the microprocessor.

5. Trip unit according to one of the claims 1 to 4, characterized in that it comprises a calibration circuit (34) of an analog signal of a phase fault current and of an analog signal of an earth fault current, the outputs of the calibration circuit (34) being connected to different inputs (1–6) of the multiplexer (29) controlled by the microprocessor (48).

6. Trip unit according to any one of the preceding claims, characterized in that a protection circuit with diodes (44) is associated with the different inputs (1–6) of the multiplexer (29) in order to limit the voltage applied on said inputs to a value which is compatible with the characteristics of the multiplexer.

## Patentansprüche

1. Statischer digitaler Auslöser für einen elektrischen Leistungsschalter mit:
   - Stromfühlern (16), die Analog-Signale erzeugen, welche proportionell zu den Strömen sind, die die von dem Leistungsschalter geschützten Leiter (RST) durchfließen,
   - Gleichrichterstromkreisen (18), um die genannten Signale gleichzurichten und ein Analog-Dauersignal auszusenden, welches den Höchstwert der genannten Ströme darstellt,
   - einem Analog-Digital-Wandler (50) mit einem das genannte Analog-Signal empfangenden Eingang und einem ein entsprechendes Probe-Digital-Signal sendenden Ausgang,
   - einer digitalen Mikroprozessor-Verarbeitungseinheit (48), an der ein Digital-Signal angelegt wird, um eine Langzeitverzögerungs- (LR) Auslösefunktion und eine Kurzzeitverzögerungs- (CR) Auslösefunktion zu gewährleisten, und die bei Überschreiten vorbestimmter Schwellen einen Auslösebefehl des Leistungsschalters erstellt, der gemäß dem Signalwert verzögert wird,
   - und einem Auslösemittel (12, 14) des Leistungsschalters, das von dem genannten Auslösebefehl aktiviert wird,

dadurch gekennzeichnet, daß die genannte digitale Mikroprozessor-Verarbeitungseinheit für die Langzeitverzögerungs- (LR) Auslösefunktion eine Kalibrierschaltung (34) aufweist, mit einem Eingang, welcher das genannte Analog-Signal empfängt und auf mindestens vier Ausgangskanälen (1–6) vier Analog-Signale erzeugt, deren Werte in einem vorbestimmten Verhältnis stehen, und mit einem Multiplexer (29), von dem vier Eingänge mit den vier Kanälen der Kalibrierschaltung (34) verbunden sind, und dessen Ausgang mit dem Eingang des Analog-Digital-Wandlers (50) verbunden ist, wobei die Kalibrierschaltung (34) wenigstens zwei Verstärker (26, 28) mit einem vorbestimmten Gewinnverhältnis aufweist, und wobei der Ausgang jedes Verstärkers einerseits mit einem Eingang des Multiplexers (1, 3) und andererseits mit einer Teilerbrücke (30, 32) verbunden ist, dessen Mittelpunkt mit einem anderen Eingang (2, 4) des Multiplexers (29) verbunden ist, und wobei der Multiplexer von dem Mikroprozessor (48) gesteuert wird, um einen der genannten Kanäle zu wählen, verträglich mit der Dynamik des Analog-Digital-Wandlers, wobei das Ausgangs-Signal des genannten Multiplexers eine Dauermessung des genannten Analog-Signals ist.

2. Auslöser gemäß Anspruch 1, dadurch gekennzeichnet, daß der Analog-Digital-Wandler (50) 8 Bits aufweist, wobei das Gewinnverhältnis der beiden Verstärker der Kalibrierschaltung 8 oder 10 beträgt.

3. Auslöser gemäß einem der Ansprüche 1 und 2, dadurch gekennzeichnet, daß der Mikroprozessor (48) den dem höchsten Wert entsprechenden Kanal (1–6) aktiviert, auf diesem Kanal digitalisiert und den Wert speichert, wenn der Digitalwert einen vorbestimmten Wert überschreitet, während die Digitalisierung auf dem anderen Kanal von niedrigerem Wert ausgeführt wird, wenn der Digitalwert niedriger als der genannte vorbestimmte Wert ist.

4. Auslöser gemäß Anspruch 3, dadurch gekennzeichnet, daß der Digitalwert mit einem vorbestimmten Faktor multipliziert wird, der dem Untersetzungsfaktor des Analog-Signals in der Kalibrierschaltung (34) in dem von dem Mikroprozessor (48) aktivierten Kanal (1–6) entspricht.

5. Auslöser gemäß einem der Ansprüche 1 bis 4, dadurch gekennzeichnet, daß er eine Kalibrierschaltung (34) eines Analog-Signals eines Phasenfehlerstroms und eines Analog-Signals eines Erdfehlerstroms aufweist, wobei die Ausgänge der Kalibrierschaltung (34) mit verschiedenen Eingängen (1–6) des von dem Mikroprozessor (48) gesteuerten Multiplexers (29) verbunden sind.

6. Auslöser gemäß irgend einem der vorhergehenden Ansprüche, dadurch gekennzeichnet, daß eine Schutzschaltung mit Dioden (44) mit den verschiedenen Eingängen (1–6) des Multiplexers (29) verbunden ist, um die an den genannten Eingängen angelegte Spannung auf einen Wert zu begrenzen, der mit den Kennzeichen des Multiplexers verträglich ist.

FIG 1

Fig 2

Fig 3

Fig 4

EP 0 193 447 B1

Fig 5

Fig 5 — Organigramme:

- NUMERISER SUR VOIE 14 In
- RESULTAT ≥ 128
  - oui → MULTIPLIER LA NUMERISATION PAR 16
  - non → NUMERISER SUR VOIE 7 In
- RESULTAT ≥ 64
  - oui → MULTIPLIER LA NUMERISATION PAR 8
  - non → NUMERISER SUR VOIE 1,7 In
- RESULTAT ≥ 128
  - oui → MULTIPLIER LA NUMERISATION PAR 2
  - non → NUMERISER SUR VOIE 0,8 In
- RANGER LE RESULTAT DE NUMERISATION

Fig 6

EP 0 193 447 B1

**Fig 7**

_Fig 8_

Fig 9

<u>Fig 10</u>

```
┌─────────────────────────────────┐
│          Initialisations        │
└─────────────────────────────────┘
                 │
┌─────────────────────────────────┐
│      Acquisition des réglages    │
└─────────────────────────────────┘
                 │
┌─────────────────────────────────┐
│     Acquisition de la valeur     │
│         du courant phase         │
└─────────────────────────────────┘
                 │
┌─────────────────────────────────┐
│     Acquisition de la valeur     │
│         du courant terre         │
└─────────────────────────────────┘
                 │
┌─────────────────────────────────┐
│       Ech. blocage I. Phase      │
└─────────────────────────────────┘
                 │
┌─────────────────────────────────┐
│       Ech. blocage I. terre      │
└─────────────────────────────────┘
                 │
┌─────────────────────────────────┐
│      Traitement fonction         │
│          Instantané              │
└─────────────────────────────────┘
                 │
┌─────────────────────────────────┐
│      Séparation    1/2           │
│        Traitement                │
└─────────────────────────────────┘
```

Calcul $i^2$

Traitement LR

Traitement CR

Traitement PT

Signalisation déclenchement

Boucle d'attente 1,84 ms
Pour Synchronisation

Fig 11